# EUROPEAN PATENT APPLICATION

(11) **EP 2 568 265 A1**
(43) Date of publication of application: **13.03.2013**
(21) Application number: 11180749.1
(22) Date of filing: 09.09.2011
(51) Int. Cl.: G01F 23/26, B22D 2/00

(54) **Apparatus and method for measuring the liquid metal level in a metallurgical vessel**

(71) Applicant: Tata Steel UK Limited, 1970 CA IJmuiden (NL)
(72) Inventor: The designation of the inventor has not yet been filed
(74) Representative: Bodin, Andre

(57) **Abstract**

This invention relates to both an apparatus and a method for measuring the liquid metal level, the condition of the lining and/or the hot heel in a metallurgical vessel.

## Description

This invention relates to both an apparatus and a method for measuring the liquid metal level, the condition of the lining and/or the hot heel in a metallurgical vessel.

Techniques for measuring the depth of molten steel (or other liquid metals) covered by a layer of slag in a metallurgical vessel are known in the prior art. Examples of such vessels are Ladles or Tundishes. In such a vessel a layer of molten, non-metallic material known as slag is present over the upper surface of the molten steel (or other liquid metal). Such slag is formed from a mixture of flux materials which are added during the refining process and the impurities separated from the metal during the refining operation. The resulting layer of slag over the upper surface of the molten steel (or other liquid metal) serves the useful purposes of regulating the chemistry of the molten steel (or other liquid metal), isolating the molten steel (or other liquid metal) from ambient atmosphere (air), and reducing heat losses by thermally insulating liquid metal.

During emptying of an Electric Arc Furnace (EAF) or a BOS converter (tapping), it may be desirable to drain out the maximum amount of the molten steel (or other liquid metal) as possible to maximise furnace yield. If during tapping, slag also flows through the outlet nozzle of the electric arc furnace or a BOS converter then, the amount of slag tapped with the steel (or other liquid metal) may be critical because the requirements for downstream processing of the molten steel (or other liquid metal) tapped from the vessel could be jeopardised and/ or product quality could be degraded if this amount is too high. Therefore, it may be advantageous to minimise the amount of slag that is drained out during the tapping process by leaving some metal in the electric arc furnace or a BOS converter and under these conditions, furnace yield will be reduced. In an electric arc furnace it is often necessary to leave some steel in the furnace to assist in the initiation of arcing of the electrodes for the next charge. In any case, it is desirable to determine the amount of slag carried over with the liquid steel (or other liquid metal) so that further processing can be carried out in a controlled and consistent manner.

The simplest prior art method for determining the depth of molten steel (or metal) in a vessel is visual observation. If the operator of the facility knows the approximate thickness of the layer of slag over the steel (or other liquid metal), the depth of the molten steel (or other liquid metal) within the vessel can be approximately estimated by observing where the top of the slag layer is relative to the top of the vessel. But, such a method based upon visual estimations is necessarily inaccurate. Also known are steel (or other liquid metal) depth measuring devices which employ coils designed to generate eddy current changes in response to the proximity of the molten metal. While such devices may be able to measure the level of molten steel (or other liquid metal) more accurately than visual techniques, they still provide only an approximation of the depth of the molten steel (or other liquid metal).

An apparatus and method for quickly determining the depth of slag in a furnace or ladle is disclosed in US3850416 where a pyrolytic coating is applied to a metallic lance so that upon immersion through said slag, the lance will be cleanly etched by the metal without hindrance from the slag. Determination of the depth is obtained by measuring between the top of the etched marking and an indicator which is aligned with the top of the slag layer. This method has proved to be inaccurate. Other similar simple methods based on dipped probes have been used but the accuracy of the results is limited.

Techniques based on the reflection of radar or microwaves from the slag surface have also been used on molten metal ladles, but these give the position of the upper slag surface and not the level of the liquid metal below the slag.

The inventors have observed that there is a need for accurately measuring the level of the liquid metal in such vessels.

The object of the invention is to provide an apparatus and a method for determining the level of the liquid metal in a metallurgical vessel.

Another object of the invention is to provide an apparatus and a method for monitoring the local thickness of the refractory lining of the metallurgical vessel.

Another object of the invention is to enable accurate measurement of the metal retained in a metallurgical vessel after tapping the metallurgical vessel (typically called the hot heel weight).

Ideally, such an apparatus and method would be reliable, simple, rugged, and inexpensive to use. Finally, it would be desirable if the apparatus to perform the method could be easily installed and used in connection with pre-existing equipment so as to minimise the effort and expense associated with installation.

One or more of these objects of the invention are reached with the apparatus according to claim 1 and the method according to claim 10. Preferable embodiments are embodied in the dependent claims 2 to 9 and 11 to 12.

In the apparatus according to the invention the level of the liquid metal in a metallurgical vessel, for instance steel in an electric arc furnace or a BOS-converter, which comprises a metal furnace shell and a refractory lining protecting the furnace shell against the thermal and mechanical influence of the liquid metal, a plurality of electromagnetic sensors are mounted in or behind the safety lining. The electromagnetic response of the sensors and the changes in the response in dependence of the level of the liquid metal in the vessel or the condition of the refractory lining (e.g. thickness) is monitored and used to determine the level of the liquid metal in the vessel or the condition of the lining. The gradual wear of the lining will introduce a change in the electromagnetic response and therefore this change in response can be used to monitor the thickness of the lining in situ.

The number of sensors needed depends on the size of the vessel and the required accuracy. Obviously, with the increase in numbers the installation and maintenance costs increase, whereas the reliability and the accuracy of the system increases as well. However, there is an optimum which needs to be determined on a case by case basis. It is believed by the inventors that for a standard size electric arc furnace or a BOS-converter more than 10 sensors are required around the circumference of the vessel.

The sensors may be evenly distributed along the circumference of the vessel, particularly if the vessel is a cylindrical or ellipsoid vessel, so that the electromagnetic response is similar at every location around the circumference. However, as many of these vessels are tiltable to allow tapping of the liquid metal from the vessel into a retaining vessel of some kind, or a tundish, it may be preferable to provide the side of the vessel where the tapping is performed, i.e. around the tap spout/ hole or nozzle, with a higher density of sensors to achieve a more reliable or accurate reading of the metal level and/or the condition of the refractory lining.

It is possible to install the sensors in the refractory lining, and if the lining comprises a so-called working lining and a safety lining, it is preferable that the sensors are installed in the safety lining. However, the inventors found that a particlulary robust system can be provided if the sensors are mounted against the furnace shell and, preferably, covered by a protective cover. This way the sensors become an integral part of the furnace shell and are protected by the refractory lining against the molten metal. In addition to the refractory lining the sensors may be further protected by a protective cover, which may be a stainless steel plate, fixedly attached (e.g. welded) to the furnace shell and covering one or more sensors.

Preferably each electromagnetic sensor comprises a set of electromagnetic coils. Preferably the sensor coils meet at a position near to or at the bottom of the vessel shell. The number of sensor coils and their geometry and their configuration will depend on the required response on reliability and/ or accuracy of the readings of the metal level and/or the condition of the refractory lining.

According to a second aspect of the invention, a method is provided for measuring the level of a liquid metal or to determine the condition of the refractory lining by using an apparatus as described hereinabove. The electromagnetic response is recorded by a data logger and by means of dedicated software the level of the metal or the condition of the lining is determined.

## Claims

1. Apparatus for measuring the level of a liquid metal in a metallurgical vessel comprising a metal furnace shell wherein the metallurgical vessel is provided with a refractory lining for protecting the furnace shell against the thermal and mechanical influence of the liquid metal, wherein the apparatus is provided with a plurality of electromagnetic sensors, wherein the sensors are mounted in or behind the safety lining, and wherein the electromagnetic response of the sensors is monitored and used to determine the level of the liquid metal in the vessel.

2. Apparatus according to claim 1 wherein the electromagnetic response of the sensors is monitored and used to determine the level of the liquid metal in the vessel after tapping of the vessel.

3. Apparatus according to claim 1 or 2 wherein the electromagnetic response of the sensors is monitored and used to determine the condition of the refractory lining.

4. Apparatus according to any one of claims 1 to 3 wherein the refractory lining comprises a working lining and a safety lining, and wherein the electromagnetic sensors are mounted behind the working lining and/or in or behind the safety lining.

5. Apparatus according to any one of claims 1 to 4 wherein the plurality of electromagnetic sensors are substantially evenly distributed around the circumference of the vessel.

6. Apparatus according to any one of claims 1 to 4 wherein the plurality of electromagnetic sensors are distributed around the circumference of the vessel, and wherein the density of sensors at the tapping side of the vessel is higher than at the non-tapping side of the vessel.

7. Apparatus according to any one of claims 1 to 6 wherein the electromagnetic sensors comprise a set of electromagnetic coils.

8. Apparatus according to claim 7 wherein the coils meet at a position near to or at the bottom of the vessel shell.

9. Apparatus according to any one of claims 1 to 8 wherein the electromagnetic sensors are fixedly connected to the furnace shell, preferably wherein the electromagnetic sensors are covered by a protective cover so as to form an integral part of the furnace shell.

10. Method for measuring the level of a liquid metal in an apparatus according to any one of claims 1 to 9 wherein the electromagnetic response of the sensors is monitored and used to determine and control the level of the liquid metal in the vessel.

11. Method according to claim 10 wherein the electromagnetic response of the sensors is monitored and used to determine the level of the liquid metal in the vessel after tapping of the vessel.

12. Method according to claim 10 or 11 wherein the electromagnetic response of the sensors is monitored and used to determine the condition of the refractory lining.
